# EUROPEAN PATENT APPLICATION

(11) **EP 1 148 661 A2**
(43) Date of publication of application: **24.10.2001**
(21) Application number: 01850071.0
(22) Date of filing: 18.04.2001
(51) Int. Cl.: H04B 7/195

(54) **Geostationary satellite system with satellite clusters having intra-cluster local area networks and inter-cluster wide area network**

(30) Priority: 21.04.2000 US 557919
(71) Applicant: Lockheed Martin Corporation, Bethesda, MD 20817 (US)
(72) Inventor: Ford, Terry E., Aurora, Colorado 80015-4243 (US)
(74) Representative: Wihlsson, Joakim Per Magnus

(57) **Abstract**

A satellite communication system, which allows power available for communications transmissions to be cost-effectively increase, and which better utilizes limit desirable geostationary orbital slots. The satellite communications system comprises a plurality of satellite clusters, each satellite cluster disposed in a different geostationary orbital slot and a wide-area network inter-connecting the plurality of satellite clusters. Each satellite cluster comprises a plurality of communications satellites and a local area network inter-connecting the plurality of communications satellites.

## Description

### FIELD OF THE INVENTION

The present invention relates to a geostationary satellite communication system with clusters of communications satellites having intra-cluster local area networks and an inter-cluster wide area network.

### BACKGROUND OF THE INVENTION

Satellite communications have become an important component in worldwide telecommunications. Geostationary satellites offer an important advantage in that they remain at a fixed position in the sky. As demand for satellite telecommunications has increased, the techniques used to provide additional communication bandwidth typically require additional power from the satellite platform. A problem arises in that the power that can be supplied from a single satellite platform is limited. There are limits to the amount of power that power generation means of a given size can supply. The materials, structures, and launch vehicle performance limit the size of a satellite platform and thus, the size of the power generation means. Power that is generated must be dissipated and thermal dissipation considerations limit the amount of power that can be dissipated. All of these factors combine to produce an upper limit on the amount of power that can be supplied by a single satellite platform.

The standard solution to this problem has been to place additional satellites in additional orbital slots. However, the number of geostationary orbital slots is limited, and in particular, the geographically desirable geostationary orbital slots are almost all allocated. A need arises for a technique by which power available for communications transmissions can be increased in desirable geostationary orbital slots.

### SUMMARY OF THE INVENTION

The present invention is a satellite communication system which allows power available for communications transmissions to be cost-effectively increases, and which better utilizes the limited number of desirable geostationary orbital slots. The present invention a satellite system comprising a plurality of satellite clusters and a wide-area network inter-connecting the plurality of satellite clusters. Each satellite cluster is disposed in a different geostationary orbital slot and comprises a plurality of satellites, and a local area network inter-connecting the plurality of satellites.

In one embodiment of the present invention, the plurality of satellites comprises at least one satellite selected from at least one of communications satellites, remote sensing satellites, and scientific satellites. In another embodiment of the present invention, the plurality of satellites comprises at least one satellite selected from at least two of communications satellites, remote sensing satellites, and scientific satellites. In another embodiment of the present invention, the plurality of satellites comprises at least one communications satellites, at least one remote sensing satellite, and at least on scientific satellite.

In one embodiment of the present invention, the plurality of satellites comprises at least one communications satellite, which comprises a steerable antenna operable to receive a communications signal from a ground terminal; radio-frequency receiving circuitry operable to process the signal received by the antenna and decoding the signal to form communications traffic data; a data processor operable to select another satellite from among the plurality of satellites as a destination for the communications traffic data; and local-area network circuitry operable to transmit the communications traffic data to the selected satellite. The local-area network circuitry may be further operable to receive communications traffic data from another satellite; and the radio-frequency transmitting circuitry may be further operable to encode communications traffic data received by the local-area network circuitry for transmission by the antenna to a ground terminal.

In one embodiment of the present invention the plurality of satellites comprises at least one remote sensing satellite, which comprises a sensor operable to remotely sense a physical phenomenon and output a signal representing the physical phenomenon; processing circuitry operable to process the signal output from the sensor to form sensor data; a data processor operable to select another satellite from among the plurality of satellites as a destination for the sensor data; and local-area network circuitry operable to transmit the sensor data to the selected satellite. The selected satellite may be operable to transmit the sensor data to another satellite cluster or to a ground terminal.

In one embodiment of the present invention, the plurality of satellites comprises at least one scientific satellite, which comprises an experiment operable to output a signal representing results of a scientific experiment; processing circuitry operable to process the signal output from the experiment to form result data; a data processor operable to select another satellite from among the plurality of satellites as a destination for the result data; and local-area network circuitry operable to transmit the result data to the selected satellite. The selected satellite may be operable to transmit the result data to another satellite cluster or to a ground terminal.

In one embodiment of the present invention, at least one of the satellite clusters comprises an inter-cluster router satellite connected to the local-area network and to the wide-area network. The inter-cluster router satellite may comprises wide-area network circuitry operable to receive communications traffic data from another satellite cluster, the communications traffic data destined for a communications satellite in the same satellite cluster as the inter-cluster router satellite; and local-area network circuitry operable to transmit the received communications traffic data to the communications satellite for which the communications traffic data is destined. The local-area network circuitry may be further operable to receive communications traffic data from another communications satellite in the same satellite cluster as the inter-cluster router satellite, the communications traffic data destined for a communications satellite in a different satellite cluster from the inter-cluster router satellite; and the wide-area network circuitry may be further operable to transmit the received communications traffic data to the satellite cluster including the communications satellite for which the communications traffic is destined.

In one embodiment of the present invention, at least one of the satellite clusters comprises a communications/inter-cluster router combination satellite connected to the local-area network and to the wide-area network. The communications/inter-cluster router satellite may comprise a steerable antenna operable to receive a communications signal from a ground terminal; radio-frequency receiving circuitry operable to process the signal received by the antenna and decoding the signal to form communications traffic data; a data processor operable to select another communications satellite from among the plurality of communications satellites in the same satellite cluster as the communications/inter-cluster router satellite or in a different satellite cluster as a destination for the communications traffic data; local-area network circuitry operable to transmit the received communications traffic data to the selected communications satellite, if the selected communications satellite is in the same satellite cluster as the communications/inter-cluster router satellite; and wide-area network circuitry operable to transmit the received communications traffic data to the satellite cluster including the communications satellite for which the communications traffic is destined, if the selected communications satellite is in a different satellite cluster than the communications/inter-cluster router satellite. The wide-area network circuitry may be further operable to receive communications traffic data from another satellite cluster, the communications traffic data destined for a communications satellite in the same satellite cluster as the inter-cluster router satellite; and local-area network circuitry may be further operable to transmit the received communications traffic data to the communications satellite for which the communications traffic data is destined.

In one embodiment of the present invention, at least one of the satellite clusters comprises a cluster utility satellite operable to receive command data from a ground terminal and transmitting the command data to the plurality of satellites. The cluster utility satellite may comprise a power generator; and power distribution circuitry operable to transmit power to the plurality of satellites.

### BRIEF DESCRIPTION OF THE DRAWINGS

The details of the present invention, both as to its structure and operation, can best be understood by referring to the accompanying drawings, in which like reference numbers and designations refer to like elements.
- Fig. 1: is a diagram of prior art satellites in geostationary orbit above the Earth.
- Fig. 2a: is an exemplary block diagram of a homogeneous embodiment of a geostationary satellite cluster, according to the present invention.
- Fig. 2b: is another exemplary block diagram of the homogeneous geostationary satellite cluster shown in Fig. 2a.
- Fig. 2c: is an exemplary block diagram of inter-satellite communications in the geostationary satellite cluster shown in Fig. 2a.
- Fig. 3: is an exemplary block diagram of a heterogeneous embodiment of a geostationary satellite cluster, according to the present invention.
- Fig. 4: is an exemplary block diagram of an intra-cluster local area network (LAN) implemented in the geostationary satellite clusters shown in Fig. 3.
- Fig. 5: is an exemplary block diagram of a worldwide geostationary satellite cluster system, according to the present invention.
- Fig. 6: is one embodiment of a satellite cluster shown in Fig. 5.

- Fig. 7: is another embodiment of a satellite cluster shown in Fig. 5.
- Fig. 8: is another embodiment of a satellite cluster shown in Fig. 5.

### DETAILED DESCRIPTION OF THE INVENTION

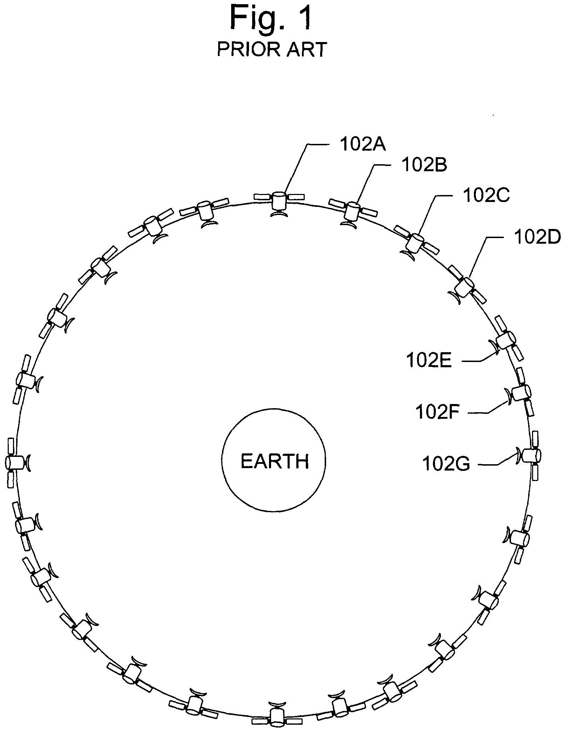

Satellites in geostationary orbit above the Earth are shown in Fig. 1. A geostationary orbit is an equatorial orbit having the same angular velocity as that of the Earth, so that the position of a satellite in such an orbit is fixed with respect to the Earth. Geostationary orbit is achieved at a distance of approximately 22,236 miles above the Earth. Satellites operating on the same frequency band must be spatially separated to avoid interference due to divergence of the signal transmitted from the ground. The separation between orbital slots is typically expressed in terms of the angular separation of the slots. While many factors affect the separation that is necessary, the standard separation enforced by international regulatory bodies is 2 degrees of arc. Since geostationary orbit requires an equatorial orbit, all geostationary orbital slots lie in the same plane. Thus, the number of geostationary orbital slots is limited. As shown in Fig. 1, satellites 102A-G are disposed in different orbital slots in geostationary orbit. With a required separation of 2 degrees of arc, there are only 180 geostationary orbital slots available. The situation is exacerbated by the fact that some of the orbital slots are more desirable than others. For example, orbital slots serving populated landmasses are more desirable than orbital slots serving unpopulated land areas or the oceans.

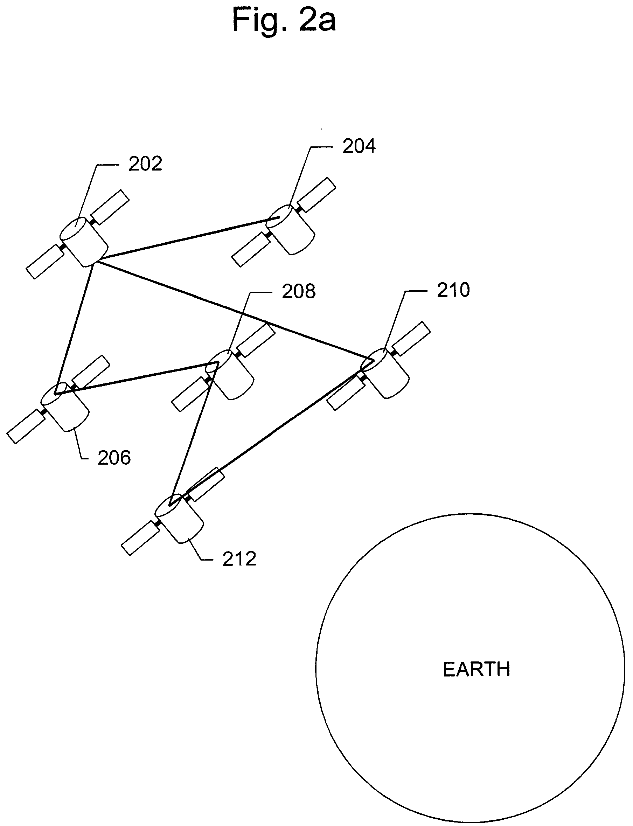

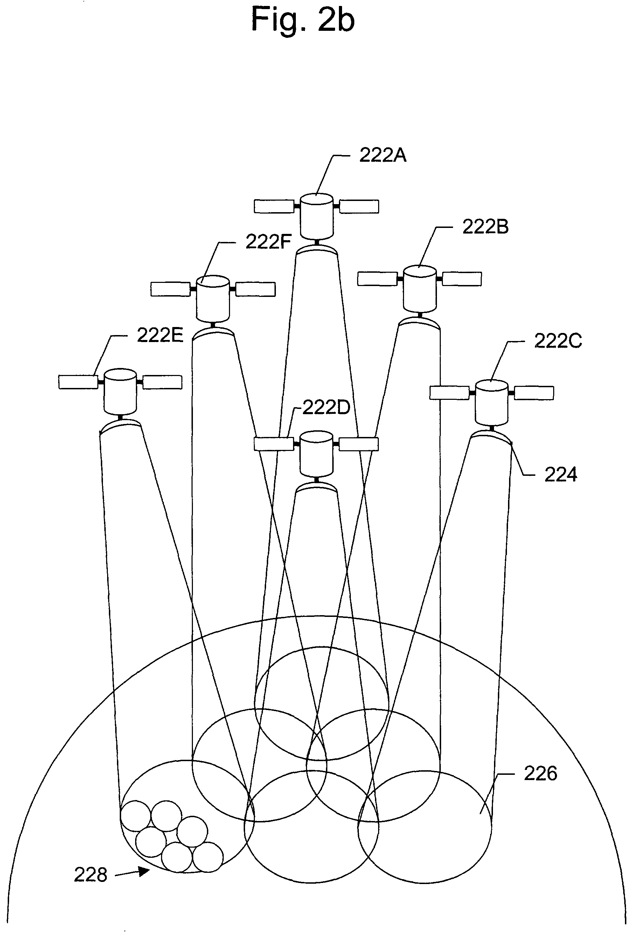

An exemplary block diagram of a homogeneous embodiment of a geostationary satellite cluster, according to the present invention, is shown in Fig. 2a. In this embodiment, cluster satellites 202-212 are homogeneous; that is, all satellites perform similar functions in the cluster. The functions performed by each cluster satellite include broadband telecommunications relay and communications with other satellites in the cluster. This embodiment allows N cluster satellites to cover N terrestrial communications zones, as shown more clearly in Fig. 2b. Each cluster satellite 222A-F has a steerable antenna system, which allows each satellite to cover one or more different terrestrial zones, even though all satellites are in the same orbital slot. A steerable antenna system must include at least one steerable antenna, but may include a plurality of steerable antennas. Each steerable antenna may provide coverage of a different terrestrial zone. Each steerable antenna may further subdivide each terrestrial zone into a plurality of smaller zones, such as sub-zones 228.

For example, cluster satellite 222C includes steerable antenna system 224, which allows coverage of terrestrial zone 226. For clarity, each cluster satellite 222A-F is shown as covering only one terrestrial zone. However, antenna systems may be provided which provide coverage of more than one terrestrial zone per satellite. Typically, the zones covered by satellites in a satellite cluster overlap, as shown in Fig. 2b, to provide gapless coverage. However, since the antenna systems are steerable, other coverage patterns are possible. For example, if the traffic in one terrestrial zone exceeds the capacity of one cluster satellite, one or more additional cluster satellites may be used to cover that same terrestrial zone. Furthermore, the steerable antenna system allows zone coverage to be changed dynamically in response to usage and other needs. For example, traffic patterns may require temporary additional capacity in certain terrestrial zones. Likewise, if a cluster satellite should fail, the coverage zones of one or more other cluster satellites may be adjusted to provide backup coverage for the zone previously covered by the failed cluster satellite.

In this embodiment, current satellite products may be used with only minor modifications. Furthermore, it should be possible to realize cost savings from economies of scale if the same or similar hardware platforms are utilized for the satellites in a cluster. As described above, the cluster satellites should have steerable antenna systems. Many current satellite products already incorporate steerable antenna systems. Due to the relatively small spatial separation among satellites, it is preferred that each cluster satellite incorporate autonomous station keeping.

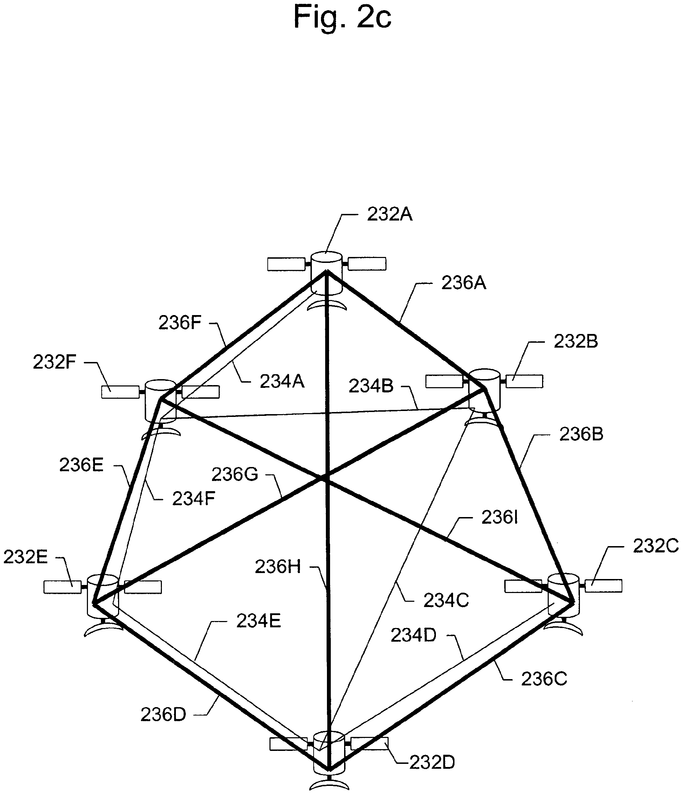

Preferably, inter-satellite communications is provided by crosslinks among the satellites 232A-F, as shown in Fig. 2c. The crosslink arrangement shown in Fig. 2c is only an example and, for clarity, only a subset of the crosslinks that may actually be used are shown. Two types of crosslinks may be used: ranging crosslinks and channel routing crosslinks. Ranging crosslinks, such as crosslinks 234A-F, are low bandwidth radio frequency (RF) or optical/laser links that allow satellites in a cluster to determine their range and angular separation from one another. This information is used to provide station keeping and to ensure satisfactory spatial separation of the satellites in the cluster. However, each cluster satellite should have at least two, and preferably more than two, ranging crosslinks in order to adequately determine its position in the cluster.

Channel routing crosslinks, such as crosslinks 236A-I, are high bandwidth RF or optical crosslinks that provide inter-satellite routing of the communications traffic handled by the cluster. It is also possible that the communications. and ranging functions may be combined into a single type of crosslink. Intra-cluster, inter-satellite communications routing is implemented in a local-area network (LAN) environment, as described below.

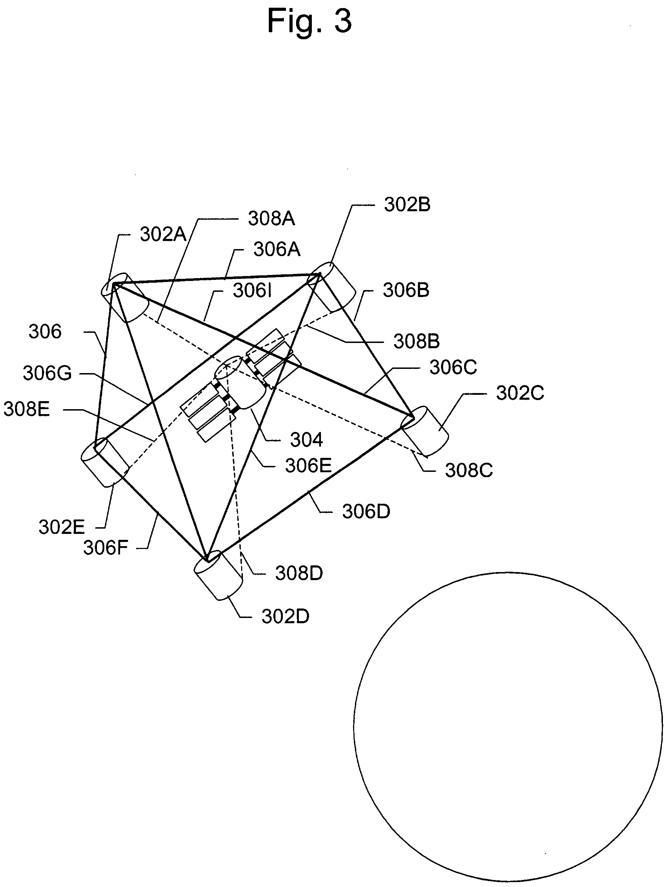

An exemplary block diagram of a heterogeneous embodiment of a geostationary satellite cluster, according to the present invention, is shown in Fig. 3. In this embodiment, the satellites 302A-E are homogeneous and perform broadband telecommunications relay and communications with other satellites in the cluster. However satellite 304, the cluster utility satellite, is not similar to the other satellites in the cluster. Cluster utility satellite 304 may include power generation and distribution equipment and a ground link for telemetry and command data for the cluster. The satellites in the heterogeneous cluster need not be the same as the satellites in the homogeneous cluster because the cluster utility satellite performs some functions, such as power generation and ground telemetry and command, for the satellites in the heterogeneous cluster that the satellites in the homogeneous cluster must perform for themselves. Thus, the satellites in the heterogeneous cluster need not include power generation and ground telemetry and command functions. Each cluster satellite 302A-E has a steerable antenna system, which allows each satellite to cover one or more different terrestrial zones, even though all satellites are in the same orbital slot. A steerable antenna system includes at least one steerable antenna, but may include a plurality of steerable antennas. Each steerable antenna may provide coverage of a different terrestrial zone.

Preferably, inter-satellite communications is provided by crosslinks among the cluster satellites 302A-E and cluster utility satellite 304. The crosslink arrangement shown in Fig. 3 is only an example and, for clarity, only a subset of the crosslinks that may actually be used are shown. Four types of crosslinks may be used: ranging crosslinks, cluster command and control crosslinks, power distribution crosslinks, and channel routing crosslinks. The ranging crosslinks and channel routing crosslinks are represented in Fig. 3 by crosslinks 306A-I, each of which links two of satellites 302A-E. The cluster command and control crosslinks and power distribution crosslinks are represented in Fig. 3 by crosslinks 308A-E, each of which links one satellite 302A-F with cluster utility satellite 304. Ranging crosslinks are radio frequency (RF) or optical/laser links that allow satellites in a cluster to determine their range from one another. This information is used to provide station keeping and to ensure satisfactory spatial separation of the satellites in the cluster. However, each cluster satellite should have at least two, and preferably more than two, ranging crosslinks in order to adequately determine its position in the cluster.

Channel routing crosslinks are high bandwidth RF or optical crosslinks that provide inter-satellite routing of the communications traffic handled by the cluster. Intra-cluster, inter-satellite communications routing is implemented in a local-area network (LAN) environment, as described below.

Cluster command and control crosslinks are low bandwidth RF or optical crosslinks that communicate commands received from the ground by cluster utility satellite 304 to the appropriate cluster satellite. The command and control crosslinks are also used by cluster utility satellite 304 to control the satellites in the cluster. For example, if cluster utility satellite 304 performs the station-keeping function for the cluster, cluster utility satellite 304 may communicate the appropriate commands to the cluster satellites 302A-E over the command and control crosslinks. Likewise, the command and control crosslinks may be used to communicate telemetry data from the cluster satellites 302A-F to cluster utility satellite 304, which may process the telemetry data itself, or which may transmit the telemetry data to the ground.

Power distribution crosslinks are low bandwidth, high power, RF or optical crosslinks that transmit power from cluster utility satellite 304 to each of the cluster satellites 302A-F.

It is important to note that the feature that distinguishes a homogeneous satellite cluster from a heterogeneous satellite cluster is that the heterogeneous satellite cluster includes a cluster utility satellite, while the homogeneous cluster does not. The satellites in a homogeneous cluster need not all be the same hardware platform, they need only perform similar functions in the cluster and not rely on a cluster utility satellite in order to perform their missions. Both homogeneous and heterogeneous clusters may have members that perform exactly the same mission or a mixture of missions. For example, in a homogeneous cluster, all satellites may be communications satellites, all satellites may be remote sensing satellites, all satellites may be scientific satellites, there may be a mixture of communications satellites, remote sensing satellites, and/or scientific satellites, or there may be individual satellites which combine communications, remote sensing, and or scientific missions. The distinguishing feature of a homogeneous cluster is that no cluster utility satellite is needed for the satellites in the cluster to perform their missions. Likewise, in a heterogeneous cluster, there is a cluster utility satellite along with other satellites, which may be all communications satellites, all remote sensing satellites, all scientific satellites, a mixture of communications satellites, remote sensing satellites, and/or scientific satellites, or there may be individual satellites which combine communications, remote sensing and/or scientific missions. The distinguishing feature of a heterogeneous cluster is that a cluster utility satellite is needed for the satellites in the cluster to perform their missions.

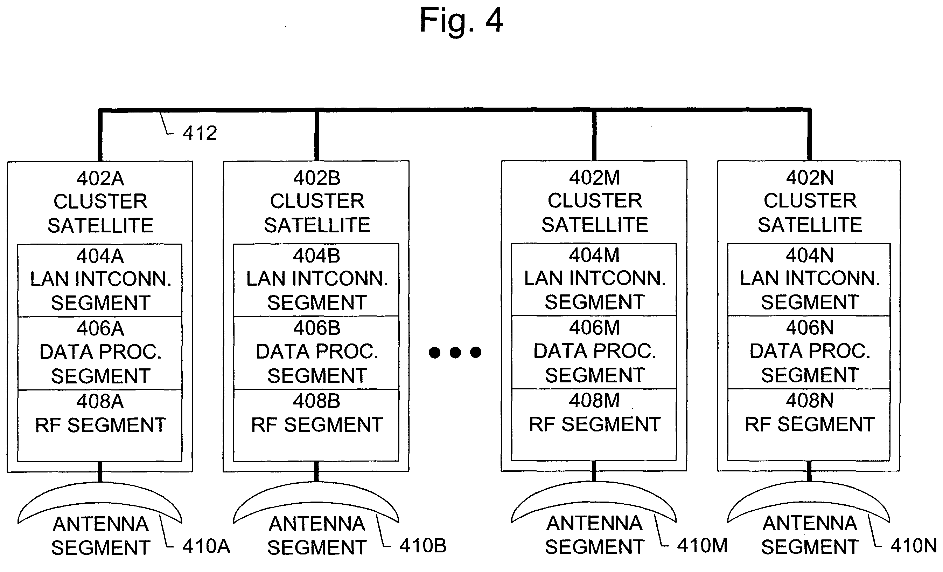

An exemplary block diagram of an intra-cluster local area network (LAN) is shown in Fig. 4. The example shown in Fig. 4 is typically implemented in a homogeneous satellite cluster, but may also be implemented in a heterogeneous satellite cluster. A cluster includes a plurality of satellites, such as satellites 402A-N. Each satellite, such as satellite 402A, includes a LAN interconnect segment 404A, a data processing segment 406A, an RF segment 408A, and an antenna segment 410A. Antenna segment 410A receives communications signals from ground terminals within the antenna's terrestrial coverage zone and transmits signals to such ground terminals. RF segment 408A processes the signals received by antenna segment 410A and decodes the signal to provide communications traffic data packets. RF segment 408A also encodes communications traffic for transmission by antenna segment 410A. Data processing segment 406A processes the communications traffic and determines the proper routing for each packet of communications traffic data. LAN interconnect segment 410A implements a wireless LAN, which provides the satellite with the functionality to communicate over the intra-cluster LAN 412.

Under some circumstances a satellite may route communications traffic within the satellite itself, as is well known. For example, this may occur when there are multiple ground terminals in communication with the satellite and communications traffic is directed from one such ground terminal to another. The multiple ground terminals may all be within the same terrestrial coverage zone and communicating either on the same RF band or on different RF bands. The ground terminals may be in different terrestrial coverage zones or sub-zones if the satellite has the capability to cover more than one terrestrial zone or sub-zone.

However, the present invention provides the capability to route communications traffic among satellites. For example, this may occur when communication traffic is directed from a ground terminal in a terrestrial coverage zone covered by one satellite to a ground terminal in a terrestrial coverage zone covered by another satellite in the same cluster. In this case, communications traffic is routed from one satellite to another over the intra-cluster LAN 412. Preferably, the intra-cluster LAN is implemented as an RF or optical crosslink with a data bandwidth of about 4 gigabit-per-second (gbps). The intra-cluster LAN crosslink is preferably a relatively low powered link, with a range limited to about 200 kilometers (km). This range is sufficient to obtain satisfactory communications quality among satellites in the cluster, yet will avoid interference with satellites in other orbital slots. If necessary, multiple LANs may be provided, in order to increase the intra-cluster data bandwidth. Multiple LANs may be implemented by using multiple RF or optical frequencies, or if the directivity is sufficient, multiple beams on the same frequency.

In a typical embodiment used for commercial telecommunications, three to five satellites would be used in one cluster. Each satellite in the cluster would have a 125 megahertz (MHz) frequency allocation, which would provide a data bandwidth of about 2 gbps. In another embodiment for military use, the satellites would use the military KA band and would include anti-jamming capabilities.

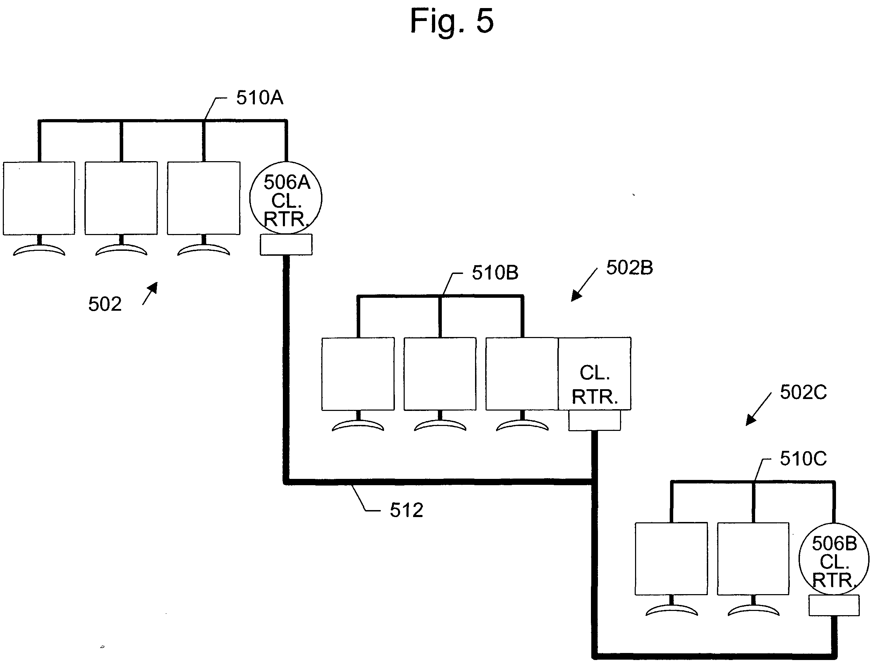

Each geostationary orbital slot only provides communication coverage of a portion of the Earth. In order to provide worldwide communications, several clusters of satellites, each cluster in a different geostationary orbital slot, may be used. An exemplary worldwide geostationary satellite cluster system is shown in Fig. 5. A plurality of satellite clusters, such as clusters 502A, 502B, and 502C are deployed in geostationary orbit, each cluster occupying a different orbital slot. Each cluster includes a plurality of satellites. For example, cluster 502A includes cluster satellites 504A, 504B, and 504C, as well as cluster router 506A. Cluster 502B includes cluster satellites 504D and 504E, as well as cluster satellite/inter-cluster router combination 508. Cluster 502C includes cluster satellites 504F and 504G, as well as cluster router 506B. The satellites in each cluster communicate using an intra-cluster local area network (LAN). For example, the satellites in cluster 502A communicate with each other using intra-cluster LAN 510A. The satellites in cluster 502B communicate with each other using intra-cluster LAN 510B. The satellites in cluster 502C communicate with each other using intra-cluster LAN 510C. Clusters of satellites communicate with each other using inter cluster wide area network (WAN) 512.

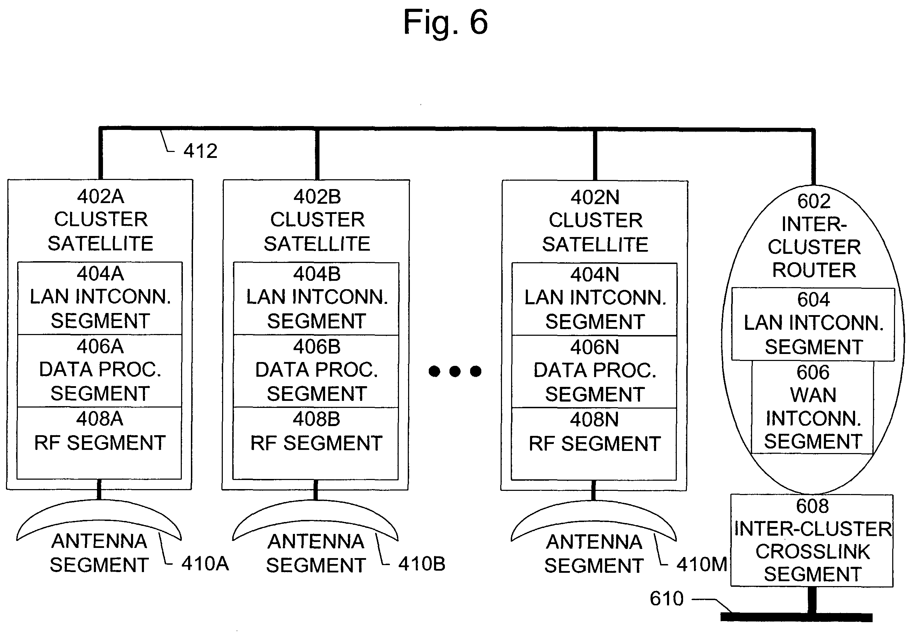

One embodiment of a satellite cluster in which inter-cluster communications are provided is shown in Fig. 6. The satellite cluster shown in Fig. 6 includes cluster satellites 402A-N and inter-cluster router 602. Inter-cluster router 602 includes a LAN interconnect segment 604, a wide-area network (WAN) interconnect segment 606 and an inter-cluster crosslink segment 608. LAN interconnect segment 602 provides inter-cluster router 602 with the functionality to communicate over the intra-cluster LAN 412. WAN interconnect segment 606 provides inter-cluster router 602 with the functionality to communicate over inter-cluster WAN 610. Inter-cluster crosslink segment 608 is the hardware that provides the communication channel over which inter-cluster WAN 610 is carried. In a typical embodiment, the inter-cluster crosslink would be implemented as a laser crosslink, which would have a data bandwidth of about 1gbps. For redundancy, as well as adequate performance, each inter-cluster router 602 should link to at least two other satellite clusters, if there are two others available.

In embodiment shown in Fig. 6, inter-cluster router 502 is implemented in a satellite separate from cluster satellites 402A-N. This embodiment has the advantage that the entire bandwidth of the inter-cluster router connection to intra-cluster LAN 412 can be devoted to inter-cluster traffic. This embodiment has the disadvantage of the increased expense necessary to procure and launch an extra satellite to implement the inter-cluster router.

The embodiment shown in Fig. 6 may be implemented in either a homogeneous satellite cluster or in a heterogeneous satellite cluster. In a heterogeneous satellite cluster, inter-cluster router 602 may be combined with the cluster utility satellite (not shown in Fig. 6) for the cluster, or inter-cluster router 602 may be separate from the cluster utility satellite. In a homogeneous cluster, no cluster utility satellite is provided and all satellites in the cluster, including the inter-cluster router perform telecommunications traffic routing and relay. In either a homogeneous cluster or a heterogeneous cluster, inter-cluster router 602 may be implemented in a satellite platform similar to those used for cluster satellites 402A-N or in a satellite platform that is different than those used for cluster satellites 402A-N.

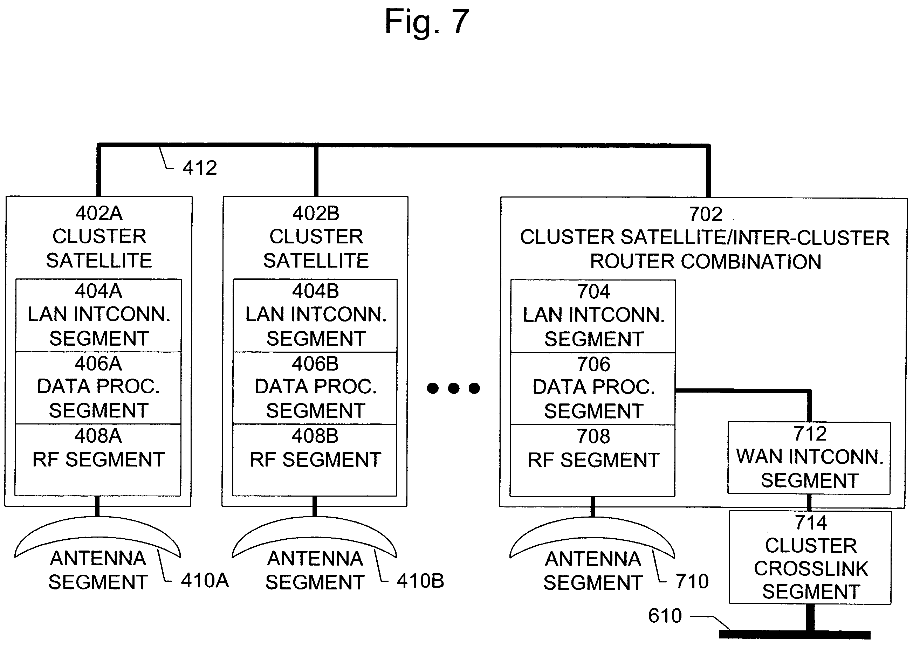

The embodiment shown in Fig. 7 avoids the expense of a separate satellite to implement the inter-cluster router. In this embodiment, the inter-cluster router is integrated with a satellite in the cluster. For example, in Fig. 7, satellite 702 is a cluster satellite/inter-cluster router combination. Satellite 702 includes all the components of a cluster satellite, such as LAN interconnect segment 704, a data processing segment 706, an RF segment 708, and an antenna segment 710. Antenna segment 710 receives communications signals from ground terminals within the antenna's terrestrial coverage zone. RF segment 708 processes the signals received by antenna segment 710 and decodes the signal to provide communications traffic data packets. Data processing segment 706 processes the communications traffic and determines the proper routing for each packet of communications traffic data. LAN interconnect segment 710 provides the satellite with the functionality to communicate over the intra-cluster LAN 412.

Satellite 702 also includes components that implement the inter-cluster router functionality, such as LAN interconnect segment 704, wide-area network (WAN) interconnect segment 712 and inter-cluster crosslink segment 714. LAN interconnect segment 702, which is connected to data processing segment 706, provides the functionality to communicate over the intra-cluster LAN 412. Data processing segment 706 processes the communications traffic received from or destined for intra-cluster LAN 412, antenna segment 710/RF segment 708, and inter-cluster WAN 610. Data processing segment 706 determines the proper routing for communications traffic data. If traffic is received from intra-cluster LAN 412 or antenna segment 710/RF segment 708 and is destined for a satellite in another satellite cluster, data processing segment 706 routes the traffic to WAN interconnect segment 712 for transmission over inter-cluster WAN 610. If traffic is received from inter-cluster WAN 610, data processing segment 706 routes the traffic to intra-cluster LAN 412 or antenna segment 710/RF segment 708. WAN interconnect segment 712 provides satellite 702 with the functionality to communicate over inter-cluster WAN 610. Inter-cluster crosslink segment 714 is the hardware that provides the communication channel over which inter-cluster WAN 610 is carried.

The embodiment shown in Fig. 7 may be implemented in either a homogeneous satellite cluster or in a heterogeneous satellite cluster. In a heterogeneous satellite cluster, cluster satellite/inter-cluster router combination 702 is provided in addition to a cluster utility satellite (not shown in Fig. 7). In a homogeneous cluster, no cluster utility satellite is provided and all satellites in the cluster, including the cluster satellite/inter-cluster router combination 702 perform telecommunications traffic routing and relay. In either a homogeneous cluster or a heterogeneous cluster, cluster satellite/inter-cluster router combination 702 may be implemented in a satellite platform similar to those used for cluster satellites 402A-N or in a satellite platform that is different than those used for cluster satellites 402A-N.

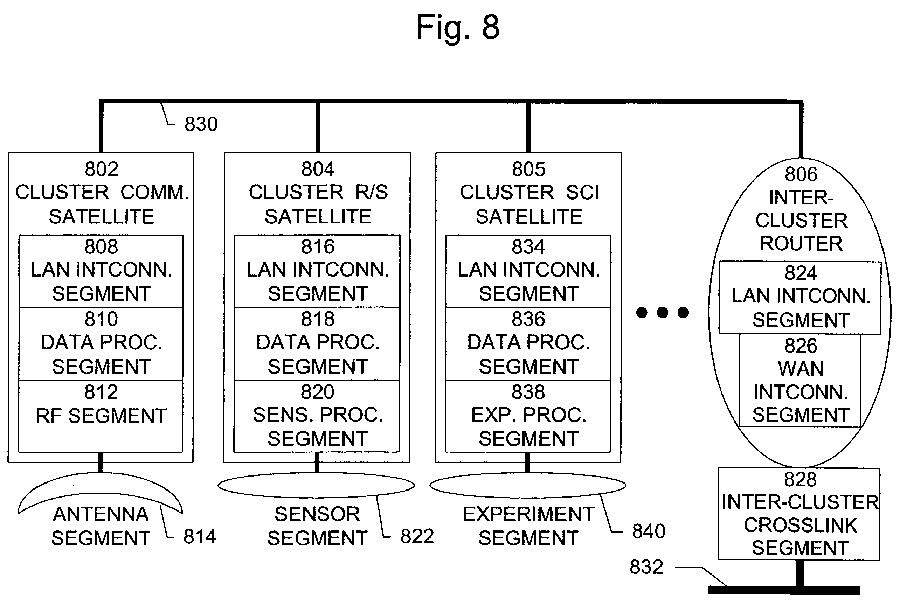

One embodiment of a hybrid satellite cluster, which includes communications satellites, remote sensing satellites, and/or scientific satellites, is shown in Fig. 8. The satellite cluster shown in Fig. 8 may include one or more cluster communication satellites, such as satellite 802, one or more cluster remote sensing satellites, such as satellite 804, one or more scientific satellites, such as satellite 805, and one or more one inter-cluster routers, such as router 806. Each cluster communications satellite, such as satellite 802, includes a LAN interconnect segment 808, a data processing segment 810, an RF segment 812, and an antenna segment 814, similar to those already described. Each cluster remote sensing satellite, such as satellite 804, includes a LAN interconnect segment 816, a data processing segment 818, a sensor processing segment 820, and a sensor segment 822. Each cluster scientific satellite, such as satellite 805, includes a LAN interconnect segment 834, a data processing segment 836, an experiment processing segment 838, and an experiment segment 840. Inter-cluster router 806 includes a LAN interconnect segment 824, a wide-area network (WAN) interconnect segment 826 and an inter-cluster crosslink segment 828.

Sensor segment 822 of cluster remote sensing satellite 804 senses physical phenomena and outputs signals representing those phenomena. Sensor processing segment 820 processes the signals output by sensor segment 822 and forms sensor data traffic that is to be transmitted to other satellites, other satellite clusters, and/or to ground terminals. Data processing segment 818 processes the sensor data traffic and determines the proper routing for the sensor data traffic. LAN interconnect segment 816 implements a wireless LAN, which provides the satellite with the functionality to communicate over the intra-cluster LAN 830.

Experiment segment 840 of cluster scientific satellite 805 performs one or more scientific experiments and outputs signals representing results of those experiments. Experiment processing segment 840 processes the signals output by experiment segment 838 and forms experiment result data traffic that is to be transmitted to other satellites, other satellite clusters, and/or to ground terminals. Data processing segment 818 processes the experiment result data traffic and determines the proper routing for the experiment result data traffic. LAN interconnect segment 816 implements a wireless LAN, which provides the satellite with the functionality to communicate over the intra-cluster LAN 830.

In embodiment shown in Fig. 8, inter-cluster router 806 is implemented in a satellite separate from the other cluster satellites. This embodiment has the advantage that the entire bandwidth of the inter-cluster router connection to intra-cluster LAN 830 can be devoted to inter-cluster traffic. This embodiment has the disadvantage of the increased expense necessary to procure and launch an extra satellite to implement the inter-cluster router.

The embodiment shown in Fig. 8 may be implemented in either a homogeneous satellite cluster or in a heterogeneous satellite cluster. In a heterogeneous satellite cluster, inter-cluster router 806 may be combined with the cluster utility satellite (not shown in Fig. 8) for the cluster, or inter-cluster router 806 may be separate from the cluster utility satellite. In a homogeneous cluster, no cluster utility satellite is provided and all satellites in the cluster perform their missions, whether communications or remote sensing, with out the need for a cluster utility satellite. In either a homogeneous cluster or a heterogeneous cluster, inter-cluster router 806 may be implemented in a satellite platform similar to those used for cluster satellites 802, 804, or 806, or in a satellite platform that is different than those used for cluster satellites 802, 804, or 806.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A satellite system comprising:
a plurality of satellites disposed in a single geostationary orbital slot; and
a local area network inter-connecting the plurality of satellites.

2. The system of claim 1, wherein the plurality of satellites comprises at least one satellite selected from at least one of communications satellites, remote sensing satellites, and scientific satellites.

3. The system of claim 1, wherein the plurality of satellites comprises at least one satellite selected from at least two of communications satellites, remote sensing satellites, and scientific satellites.

4. The system of claim 1, wherein the plurality of satellites comprises at least one communications satellites, at least one remote sensing satellite, and at least on scientific satellite.

5. The system of claim 1, wherein the plurality of satellites comprises at least one communications satellite, the at least one communications satellite comprising:
a steerable antenna operable to receive a communications signal from a ground terminal;
radio-frequency receiving circuitry operable to process the signal received by the antenna and decoding the signal to form communications traffic data;
a data processor operable to select another satellite from among the plurality of satellites as a destination for the communications traffic data; and
local-area network circuitry operable to transmit the communications traffic data to the selected satellite.

6. The system of claim 5, wherein:
the local-area network circuitry is further operable to receive communications traffic data from another satellite; and
the radio-frequency transmitting circuitry is further operable to encode communications traffic data received by the local-area network circuitry for transmission by the antenna to a ground terminal.

7. The system of claim 1, wherein the plurality of satellites comprises at least one remote sensing satellite, the at least one remote sensing satellite comprising:
a sensor operable to remotely sense a physical phenomenon and output a signal representing the physical phenomenon;
processing circuitry operable to process the signal output from the sensor to form sensor data;
a data processor operable to select another satellite from among the plurality of satellites as a destination for the sensor data; and
local-area network circuitry operable to transmit the sensor data to the selected satellite.

8. The system of claim 7, wherein the selected satellite is operable to transmit the sensor data to another satellite cluster or to a ground terminal.

9. The system of claim 1, wherein the plurality of satellites comprises at least one scientific satellite, the at least one scientific satellite comprising:
a experiment operable to output a signal representing results of a scientific experiment;
processing circuitry operable to process the signal output from the experiment to form result data;
a data processor operable to select another satellite from among the plurality of satellites as a destination for the result data; and
local-area network circuitry operable to transmit the result data to the selected satellite.

10. The system of claim 9, wherein the selected satellite is operable to transmit the result data to another satellite cluster or to a ground terminal.

11. The system of claim 1, further comprising:
a cluster utility satellite receiving command data from a ground terminal and transmitting the command data to the plurality of communications satellites.

12. The system of claim 11, wherein the cluster utility satellite comprises:
a power generator; and
power distribution circuitry transmitting power to the plurality of communications satellites.

13. A satellite system comprising:
a plurality of satellite clusters, each satellite cluster disposed in a different geostationary orbital slot, each satellite cluster comprising:
a plurality of satellites, and
a local area network inter-connecting the plurality of satellites; and
a wide-area network inter-connecting the plurality of satellite clusters.

14. The system of claim 13, wherein the plurality of satellites comprises at least one satellite selected from at least one of communications satellites, remote sensing satellites, and scientific satellites.

15. The system of claim 13, wherein the plurality of satellites comprises at least one satellite selected from at least two of communications satellites, remote sensing satellites, and scientific satellites.

16. The system of claim 13, wherein the plurality of satellites comprises at least one communications satellites, at least one remote sensing satellite, and at least on scientific satellite.

17. The system of claim 13, wherein the plurality of satellites comprises at least one communications satellite, the at least one communications satellite comprising:
a steerable antenna operable to receive a communications signal from a ground terminal;
radio-frequency receiving circuitry operable to process the signal received by the antenna and decoding the signal to form communications traffic data;
a data processor operable to select another satellite from among the plurality of satellites as a destination for the communications traffic data; and
local-area network circuitry operable to transmit the communications traffic data to the selected satellite..

18. The system of claim 17, wherein:
the local-area network circuitry is further operable to receive communications traffic data from another satellite; and
the radio-frequency transmitting circuitry is further operable to encode communications traffic data received by the local-area network circuitry for transmission by the antenna to a ground terminal.

19. The system of claim 13, wherein the plurality of satellites comprises at least one remote sensing satellite, the at least one remote sensing satellite comprising:
a sensor operable to remotely sense a physical phenomenon and output a signal representing the physical phenomenon;
processing circuitry operable to process the signal output from the sensor to form sensor data;
a data processor operable to select another satellite from among the plurality of satellites as a destination for the sensor data; and
local-area network circuitry operable to transmit the sensor data to the selected satellite.

20. The system of claim 19, wherein the selected satellite is operable to transmit the sensor data to another satellite cluster or to a ground terminal.

21. The system of claim 13, wherein the plurality of satellites comprises at least one scientific satellite, the at least one scientific satellite comprising:
a experiment operable to output a signal representing results of a scientific experiment;
processing circuitry operable to process the signal output from the experiment to form result data;
a data processor operable to select another satellite from among the plurality of satellites as a destination for the result data; and
local-area network circuitry operable to transmit the result data to the selected satellite.

22. The system of claim 21, wherein the selected satellite is operable to transmit the result data to another satellite cluster or to a ground terminal.

23. The system of claim 13, wherein at least one of the satellite clusters comprises:
an inter-cluster router satellite connected to the local-area network and to the wide-area network.

24. The system of claim 23, wherein the inter-cluster router satellite comprises:
wide-area network circuitry operable to receive communications traffic data from another satellite cluster, the communications traffic data destined for a communications satellite in the same satellite cluster as the inter-cluster router satellite; and
local-area network circuitry operable to transmit the received communications traffic data to the communications satellite for which the communications traffic data is destined.

25. The system of claim 24, wherein:
the local-area network circuitry is further operable to receive communications traffic data from another communications satellite in the same satellite cluster as the inter-cluster router satellite, the communications traffic data destined for a communications satellite in a different satellite cluster from the inter-cluster router satellite; and
the wide-area network circuitry is further operable to transmit the received communications traffic data to the satellite cluster including the communications satellite for which the communications traffic is destined.

26. The system of claim 13, wherein at least one of the satellite clusters comprises:
a communications/inter-cluster router combination satellite connected to the local-area network and to the wide-area network.

27. The system of claim 26, wherein the communications/inter-cluster router satellite comprises:
a steerable antenna operable to receive a communications signal from a ground terminal;
radio-frequency receiving circuitry operable to process the signal received by the antenna and decoding the signal to form communications traffic data;
a data processor operable to select another communications satellite from among the plurality of communications satellites in the same satellite cluster as the communications/inter-cluster router satellite or in a different satellite cluster as a destination for the communications traffic data;
local-area network circuitry operable to transmit the received communications traffic data to the selected communications satellite, if the selected communications satellite is in the same satellite cluster as the communications/inter-cluster router satellite; and
wide-area network circuitry operable to transmit the received communications traffic data to the satellite cluster including the communications satellite for which the communications traffic is destined, if the selected communications satellite is in a different satellite cluster than the communications/inter-cluster router satellite.

28. The system of claim 27, wherein:
wide-area network circuitry is further operable to receive communications traffic data from another satellite cluster, the communications traffic data destined for a communications satellite in the same satellite cluster as the inter-cluster router satellite; and
local-area network circuitry is further operable to transmit the received communications traffic data to the communications satellite for which the communications traffic data is destined.

29. The system of claim 13, wherein at least one of the satellite clusters comprises:
a cluster utility satellite operable to receive command data from a ground terminal and transmitting the command data to the plurality of satellites.

30. The system of claim 29, wherein the cluster utility satellite comprises:
a power generator; and
power distribution circuitry operable to transmit power to the plurality of satellites.
